(19) **Europäisches Patentamt / European Patent Office / Office européen des brevets**

(11) **EP 2 345 210 B1**

(12) **FASCICULE DE BREVET EUROPEEN**

(45) Date de publication et mention
de la délivrance du brevet:
**01.02.2012 Bulletin 2012/05**

(21) Numéro de dépôt: **09740486.7**

(22) Date de dépôt: **24.08.2009**

(51) Int Cl.:
*H04L 12/56* (2006.01)   *H04L 12/24* (2006.01)
*H04L 29/06* (2006.01)

(86) Numéro de dépôt international:
**PCT/FR2009/051619**

(87) Numéro de publication internationale:
**WO 2010/023400 (04.03.2010 Gazette 2010/09)**

(54) **GESTION DE TOPOLOGIE DE ROUTAGE DANS UN RESEAU**

VERWALTUNG DER ROUTING-TOPOLOGIE IN EINEM NETZWERK

MANAGEMENT OF ROUTING TOPOLOGY IN A NETWORK

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **29.08.2008 FR 0855831**

(43) Date de publication de la demande:
**20.07.2011 Bulletin 2011/29**

(73) Titulaire: **France Telecom
75015 Paris (FR)**

(72) Inventeurs:
• **BUOB, Marc-Olivier
F-92130 Issy Les Moulineaux (FR)**
• **LAMBERT, Anthony
F-44400 REZE (FR)**

(74) Mandataire: **Cabinet Plasseraud
52, rue de la Victoire
75440 Paris Cedex 09 (FR)**

(56) Documents cités:
**EP-A- 1 473 890      WO-A- 02/46949
US-A1- 2005 195 835**

**Description**

La présente invention est relative au domaine des télécommunications, et plus particulièrement des protocoles de routage et des équipements de réseau mettant en oeuvre de tels protocoles.

Un réseau de télécommunication classique comprend des équipements de réseau, appelés routeurs, ayant pour fonction d'optimiser la transmission des paquets. En effet, la transmission d'un paquet depuis un équipement jusqu'à un autre équipement dans le réseau peut généralement être réalisée suivant plusieurs chemins. Les routeurs permettent d'optimiser une telle transmission en sélectionnant le meilleur chemin de transmission parmi des chemins de transmission possibles en fonction de certains critères de performance. De tels critères peuvent par exemple correspondre au chemin le plus court en nombre de bonds entre deux routeurs, ou encore au chemin maximisant un intérêt économique pour l'exploitation du réseau considéré. Un routeur sélectionne ainsi un chemin de transmission sur la base d'informations généralement reçues selon un protocole de routage et mémorisées dans des tables de routage.

Un protocole de routage est un protocole qui fournit à un routeur des mécanismes permettant à un routeur de construire une telle table de routage et de partager des informations de routage avec d'autres routeurs avec lesquels il entretient une session selon le protocole de routage. Il existe plusieurs types de protocoles de routage qui utilisent des méthodes différentes pour aider le routeur à collecter des informations de routage et permettre de déterminer une topologie de routage indiquant les meilleurs chemins de routage dans le réseau, au regard de certains critères, pour atteindre une ressource donnée depuis un routeur donné.

La topologie de routage d'un réseau peut être modifiée, notamment lorsqu'un routeur du réseau tombe en panne. Dans ce cas, un ou plusieurs meilleurs chemins de routage peuvent disparaître et d'autres 'meilleurs chemins' sont alors à nouveau déterminés selon le protocole de routage mis en oeuvre dans le réseau considéré. La période de temps pendant laquelle on détermine de nouveaux meilleurs chemins correspond à la période de "convergence du protocole de routage".

La performance d'un tel réseau de transmission est fortement dépendante de la vitesse à laquelle la topologie de routage peut converger. En effet, plus vite la topologie de routage converge, plus vite les paquets sont routés sur les meilleurs chemins du réseau. En outre, au cours de la période de convergence de la topologie de routage, de nombreux paquets peuvent être perdus.

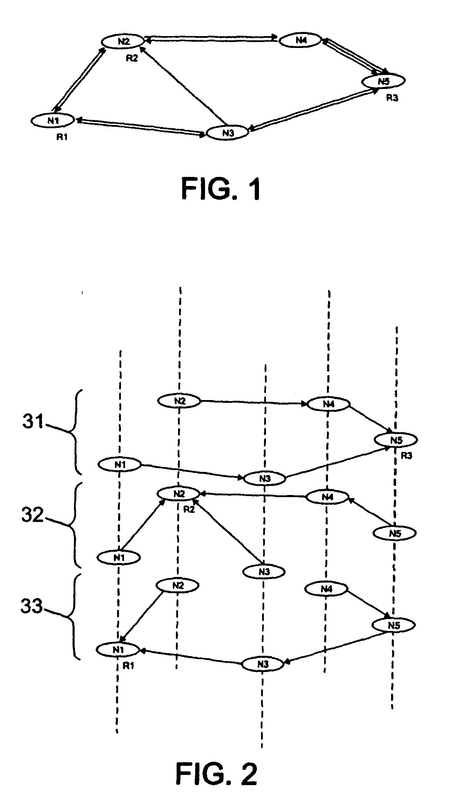

La figure 1 illustre un tel réseau de routeurs, comprenant cinq routeurs N1 à N5, les routeurs N1, N2 et N5 disposant respectivement des ressources R1, R2 et R3. Dans le contexte présent, une ressource peut être une destination dans le réseau, comme une adresse IP ou un ensemble d'adresses IP (par exemple un préfixe IP).

Dans ce contexte là, chaque routeur Nj, pour j compris entre 1 et 5, sélectionne un meilleur chemin pour joindre chaque ressource R1, R2 et R3. Dans ce réseau, selon le protocole de routage utilisé, les routeurs Nj s'échangent de l'information sur leur capacité à joindre les différentes ressources Ri, pour i compris entre 1 et 3. La mise en oeuvre d'un protocole de routage permet l'échange d'informations de routage entre les différents routeurs de sorte à mettre à jour les tables de routage respectives et ainsi mémoriser les "meilleurs" chemins.

La table de routage de chaque routeur indique les meilleurs chemins respectifs pour joindre les ressources du réseau, et l'ensemble des meilleurs chemins compose la topologie de routage du réseau. Si, sur réception de messages de mise à jour depuis d'autres routeurs, un nouveau meilleur chemin est déterminé pour joindre une ressource donnée, alors ce routeur modifie sa table de routage et en informe les routeurs voisins, c'est à dire les routeurs qui lui sont reliés par un lien direct selon la topologie de routage. On entend par 'lien direct', un lien qui relie deux routeurs directement sans autre routeur entre eux.

Puis, lorsqu'un routeur a déterminé tous ses meilleurs chemins vers les différentes ressources du réseau, il arrête de modifier sa table de routage et donc d'émettre de nouveaux messages de mise à jour selon le protocole de routage. Le routeur a alors convergé au sens du protocole de routage.

Lorsque la topologie de routage du réseau est dans un état stable, aucun message de mise à jour selon le protocole de routage n'est émis. A la convergence du protocole du routage, les meilleurs chemins entre les différents routeurs sont illustrés par des traits fléchés sur la figure 1.

La figure 2 complète la figure 1 en illustrant sous la forme d'un arbre, les meilleurs chemins pour joindre les ressources du réseau depuis les routeurs. Ainsi, l'arbre de meilleurs chemins pour joindre la ressource R3 est illustré dans une partie 31, l'arbre de meilleurs chemins pour joindre la ressource R2 est illustré dans une partie 32, et l'arbre de meilleurs chemins pour joindre la ressource R1 est illustré dans une partie 33. Ici, le critère utilisé pour sélectionner le meilleur chemin correspond en fait au plus court chemin en nombre de bonds.

Il convient de noter que, pour une ressource donnée Ri, le temps de convergence du protocole de routage, ainsi que le nombre de messages échangés selon ce protocole entre les différents routeurs du réseau, et le nombre d'états transitoires par lesquels le réseau passe durant la convergence du protocole de routage, sont très fortement liés à l'ordre dans lequel les noeuds du réseau reçoivent leurs messages. En effet, le cas idéal correspond au cas où le premier chemin appris par un routeur est son meilleur chemin. Dans ce cas, le protocole de routage converge rapidement. Le cas le pire correspond au cas où chaque routeur apprend dans l'ordre inverse de ses préférences les différents chemins possibles pour joindre la ressource considérée, c'est-à-dire dans l'ordre inverse des chemins qui seront les meilleurs chemins pour lui.

Or, les performances d'un réseau dépendent de la rapidité de convergence du protocole de routage utilisé dans ce réseau et du nombre de messages échangés selon ce protocole entre les différents routeurs du réseau.

Un document 'Differentiated BGP update processing for improved routing convergence' de W. Sun, Z. M. Mao, et K. G. Shin, Mai 2006, décrit une méthode de gestion d'échanges de messages selon le protocole de routage BGP.

La méthode de gestion décrite ici vise, dans le cas de modification de la topologie de routage, à diffuser les messages de mise à jour des tables de routage selon le protocole de routage considéré de manière prioritaire le long des arbres de meilleurs chemins, c'est-à-dire selon la topologie de routage existante avant la modification de la topologie de routage. Ainsi, chaque noeud de l'arbre est mis à jour par son père dans l'arbre existant avant la modification de la topologie de routage. Or, son père dans l'arbre existant ne correspond peut être plus à son père dans l'arbre à venir, suite à la modification de la topologie.

Une telle méthode peut fortement augmenter le temps de convergence du protocole de routage. En outre, il est complexe de gérer efficacement certaines situations de modification de la topologie de routage, comme notamment l'apparition d'une nouvelle ressource dans le réseau, puisqu'il n'existe encore aucun arbre pour cette ressource sur lequel diffuser.

Le document US 2005/195835 A1 (Savage et al.) divulgue une méthode mise en oeuvre par un routeur, comprenant :

- l'identification d'un chemin actif connecté au routeur,
- la surveillance d'attributs prescrits du chemin actif,
- la détection d'un changement dans l'un des attributs, et
- l'envoi d'un message de mise à jour (précisant le changement détecté) à un deuxième routeur.

Le document EP-A-1 473 890 (Harris Corporation) divulgue une méthode pour opérer un réseau mobile ad hoc comprenant des noeuds et des liens de communication, la méthode comprenant :

- une prédiction des routes futures prévues dans le réseau,
- une découverte de routes basée sur la prédiction des routes futures,
- un stockage des routes découvertes,
- une prédiction d'un échec de route pour les routes stockées
- une maintenance des routes basée sur la prédiction d'échec.

La présente invention vise à améliorer la situation.

Un premier aspect de l'invention propose un procédé de gestion d'une topologie de routage dans un réseau de communication par paquets comprenant une pluralité de noeuds reliés par des liens respectifs selon ladite topologie de routage ; des métriques ordonnées étant associées respectivement à des liens, chacun reliant directement deux noeuds entre eux ;

ledit procédé comprenant les étapes suivantes au niveau d'un premier noeud relié par un lien à au moins un second noeud, sur détection d'une modification de la topologie de routage :

/a/ déterminer une valeur d'un temporisateur associée au second noeud ;
/b/ armer ledit temporisateur ; et
/c/ sur expiration dudit temporisateur, émettre un message de mise à jour de topologie à destination du second noeud ;

ladite valeur de temporisateur étant fournie par une fonction croissante prenant en tant que paramètre la métrique associée audit lien reliant le premier noeud au second noeud, de sorte que la valeur de temporisateur est d'autant plus grande que la métrique est grande.

On entend ici par les termes 'topologie de routage' l'ensemble des liens qui relient deux noeuds du réseau directement entre eux, c'est-à-dire sans qu'il y ait un autre noeud entre eux, et qui sont sélectionnés selon des critères de performance de routage de paquets au sein du réseau de transmission. Ainsi, la mise en oeuvre d'un protocole de routage au sein d'un réseau de transmission permet de déterminer des 'meilleurs chemins' pour atteindre une ressource donnée depuis un noeud donné. Ces meilleurs chemins sont relatifs à un noeud et à une ressource et sont composés éventuellement de plusieurs liens successifs permettant de router les paquets de manière optimale de noeud en noeud. Une fois que ces meilleurs chemins sont obtenus et que le protocole de routage a convergé, l'ensemble des liens représente la topologie de routage.

On entend par le terme 'noeud', toute entité de réseau au niveau de laquelle peut être mise en oeuvre un protocole de routage, comme par exemple un routeur au sein d'une administration autonome (AS) ou encore un AS, telle que définie dans le document RFC 4271 (pour 'Request For Comment').

La présente invention s'applique à tous les réseaux basés sur de tels protocoles. Elle peut être mise en oeuvre dans des réseaux unifiés ainsi que dans des réseaux comprenant plusieurs domaines administratifs, ou AS. Elle peut s'appliquer dans des réseaux interconnectés à un réseau de type Internet, ou encore dans des réseaux utilisés à des fins privées.

L'invention couvre une configuration dans laquelle tous les routeurs du réseau mettent en oeuvre avantageusement un procédé selon un mode de réalisation de l'invention. Toutefois, une configuration dans laquelle un des routeurs ou une partie seulement des routeurs du réseau met en oeuvre un mode de réalisation de l'invention s'avère déjà être très avantageuse.

Grâce aux dispositions telles qu'énoncées dans ce procédé de gestion, on prévoit de déterminer une valeur de temporisateur en utilisant une fonction croissante des métriques, c'est-à-dire une fonction qui prend en paramètre une métrique et qui fournit une valeur de temporisateur d'autant plus grande que la métrique est grande. Plus la métrique associée au lien entre les premier et second noeuds est grande, plus la valeur de temporisateur utilisée pour retarder l'émission du message de mise à jour est élevée. En procédant ainsi, avantageusement, la topologie de routage peut converger rapidement vers un état final suite à une modification de la topologie, telle que notamment la suppression d'un noeud ou l'ajout d'un noeud, ou encore la perte d'un lien de la topologie par exemple en cas de panne.

En effet, selon un procédé de gestion dans un mode de réalisation de la présente invention, le moment de l'émission d'un message de mise à jour de changement de topologie est avantageusement déterminé en fonction de la métrique associée au lien entre deux noeuds voisins. En procédant ainsi, on est en mesure d'ordonnancer dans le temps l'envoi des messages de mise à jour des chemins de routage de telle façon que les messages soient diffusés prioritairement relativement aux meilleurs chemins. Autrement dit, en se reportant à une représentation des meilleurs chemins selon un arbre pour une ressource Ri donnée à atteindre, similaire à l'illustration de la figure 2, la mise en oeuvre d'un tel procédé de gestion permet de privilégier la diffusion de messages de mis à jour le long de l'arbre de plus courts chemins relatif à la ressource Ri. Appliquer un temporisateur dont la valeur de temporisateur est d'autant plus grande que la métrique, ou indicateur de performance, associée au lien sur lequel va être émis le message de mise à jour de topologie, permet d'ordonnancer de manière optimale l'émission de ces messages de mise à jour et de ce fait d'éviter notamment qu'un routeur reçoive de tels messages de mise à jour dans le sens inverse de ses préférences.

De plus, outre une convergence de protocole de routage rapide, une telle mise en oeuvre permet également de limiter le nombre de messages transmis dans le réseau suite à une modification de la topologie de routage. Ce qui permet une réduction de la charge des équipements en termes d'occupation mémoire et de charge CPU.

Ces caractéristiques sont d'autant plus avantageuses que le nombre de meilleurs chemins à mettre à jour est important, comme cela peut être le cas lors d'une panne.

Il convient aussi de noter que plus la mise à jour d'un chemin s'effectue lentement au sein de la topologie de routage, plus grande est la probabilité que des boucles de routage et des trous noirs se forment. Dans ce cas une quantité importante de données transitant sur ces chemins pendant les mises à jour peuvent être perdus, ce qui peut nécessiter leur retransmission et de ce fait affecter les performances globales du réseau.

Selon le document 'Differentiated BGP update processing for improved routing convergence', chaque noeud est mis à jour par son père dans l'arbre existant qui n'est pas forcément son père dans le nouvel arbre en cours de détermination. Par conséquent, une telle méthode peut induire des délais de recherche de meilleurs chemins au cours de la période de convergence, et notamment, lorsqu'une nouvelle ressource apparaît dans le réseau, elle ne peut être traitée efficacement, puisqu'il n'existe encore aucun arbre de meilleur chemin pour cette ressource sur lequel diffuser. En outre, selon l'enseignement de ce document, les valeurs de temporisateur sont déterminées sur la base de méthodes heuristiques. De ce fait, l'application de tels temporisateurs ne garantit pas que la mise en oeuvre du protocole de routage soit performante, contrairement à l'application de temporisateurs selon un mode de réalisation de la présente invention qui, elle, se base sur des métriques associées aux liens de la topologie de routage. Selon un mode de réalisation de l'invention, les messages de mise à jour se propagent ainsi d'autant plus vite qu'ils suivent le futur arbre des meilleurs chemins.

Avantageusement, il est ici prévu d'appliquer ainsi un temporisateur dont la valeur est déterminée en fonction d'une métrique associée au lien reliant le noeud en charge d'émettre un message de mise à jour de la topologie, c'est-à-dire le premier noeud, avec le noeud à informer, c'est-à-dire le second noeud.

Un mode de réalisation de la présente invention peut avantageusement être appliqué à tout protocole de routage qui peut être en conformité avec une modélisation mathématique qui est décrite dans des sections suivantes. Un mode de réalisation de l'invention est basé sur un protocole de routage de type BGP. Toutefois aucune limitation n'est attachée au type du protocole de routage utilisé.

En effet, on peut notamment l'appliquer aisément à un protocole à état de lien, comme un protocole de type IS-IS (pour 'Intermediate System to Intermediate System') tel que défini dans le RFC 1195 ou encore un protocole de type OSPF (pour 'Open Shortest Path First') tel que défini dans le RFC 2328.

Il convient de noter que, par exemple, pour appliquer un procédé de gestion selon un mode de réalisation de la présente invention à un protocole de type IS-IS, on prévoit une application de la temporisation, non pas pour retarder l'émission du message de mise à jour considéré comme cela est prévu dans le contexte du protocole BGP, mais pour retarder la mise à jour de la table de routage du noeud qui apprend un nouveau meilleur chemin. Ainsi, il est prévu dans ce contexte de retarder l'insertion du nouveau meilleur chemin déterminé, avec la valeur de la temporisation déterminée selon un mode de réalisation de l'invention. En procédant ainsi, on est en mesure de limiter la formation de boucles de routage qui peut se produire dans le contexte d'utilisation des protocoles de routage à état de lien. De ce fait, on réduit ainsi les pertes de paquets dans de tels réseaux de transmission.

Ainsi, dans le cas d'une mise en oeuvre au sein d'un réseau appliquant un protocole de routage à état de lien, à l'étape /c/, sur expiration du temporisateur, il est prévu de mettre à jour la table de routage du noeud considéré ici.

Dans un mode de réalisation de la présente invention, le premier noeud détecte une modification de routage sur détection de la perte d'un lien le reliant à un autre noeud ou sur réception d'un message de mise à jour de topologie depuis un autre noeud.

On peut prévoir que, lorsque le premier noeud détecte une modification de routage sur réception d'un message de mise à jour de topologie depuis un autre noeud, la fonction croissante prend en outre en paramètre une métrique reçue dans ledit message de mise à jour.

Ainsi, dans le contexte du protocole de routage BGP, la fonction croissante de temporisateur peut avantageusement prendre en paramètre la métrique associée au lien entre les premier et second noeuds, cette métrique pouvant refléter un accord d'appairage entre deux AS si les premier et second noeuds sont des AS. Cette fonction peut en outre prendre en paramètre la longueur du chemin dans le réseau en nombre de noeuds traversés entre le noeud initiateur du message de mise à jour reçu et le premier noeud considéré ici.

Ainsi, dans ce cas, la valeur de temporisateur est déterminée sur la base d'une métrique relative à l'arc entre les premier et second noeuds, ou encore relative au lien (qui peut correspondre à l'attribut BGP 'Local Pref' sur l'arc sortant tel que défini dans le document RFC 4271), et d'une métrique entrante (qui peut correspondre à l'attribut BGP 'AS PATH' tel que défini dans le document RFC 4271, et également à l'attribut 'Local Pref' sur l'arc entrant).

On peut prévoir que la valeur d'un temporisateur soit obtenue par la fonction croissante $\tau_{LP}(s)$ associée au second noeud et vérifiant l'équation suivante :

$$pour\ i < j, on\ a\ \tau_{LP}(s) = +\infty$$

$$pour\ i \geq j, on\ a\ \tau_{LP}(s) = (i - j) \times T$$

où s est la métrique associée au lien reliant les premier et second noeuds correspondant au couple (i,j) ; où i et j représentent des critères de préférence respectivement associés aux premier et second noeuds ;
où ∞ représente la valeur infinie de temporisateur ; et
où T est une constante positive.

Dans ce cas, la métrique que l'on prend en compte pour déterminer le moment de l'émission du message de mise à jour de la topologie de routage est liée à des critères de préférence. De tels critères de préférence peuvent refléter les termes d'un accord d'interconnexion entre exploitants du réseau et indiquer ainsi les préférences de routage qui y sont attachées. Dans le contexte d'un réseau comprenant une pluralité de AS de type BGP, i et j peuvent correspondre avantageusement au couple de valeurs de communauté BGP qui reflètent un accord d'interconnexion entre AS, tel que cela est défini dans le document RFC 1997.

On peut en outre prévoir de prendre en compte une métrique relative au chemin depuis un noeud initiateur du message de mise à jour jusqu'au second noeud. Ainsi, lorsque le premier noeud détecte une modification de routage sur réception d'un message de mise à jour de topologie depuis un autre noeud, on peut prévoir que la valeur est obtenue par application de la fonction croissante $\tau_{BGP}(s, s')$ associée au second noeud vérifiant l'équation suivante :

$$\tau_{BGP}(s, s') \mapsto T.\tau_{LP}(s) + T'.\tau_{AP}(s')$$

où la fonction de temporisateur croissante $\tau_{LP}(s)$ est telle que

$$pour\ i < j, on\ a\ \tau_{LP}(s) = +\infty$$

$$pour\ i \geq j, on\ a\ \tau_{LP}(s) = (i - j) \times T$$

où s est une métrique associée au lien reliant les premier et second noeuds et correspond au couple (i, j), s comprenant une partie configurée au niveau du premier noeud et une partie reçue dans le message de mise à jour ;

où ∞ représente la valeur infinie de temporisateur ;

où T est une constante positive ;

où $\tau_{AP}$ est tel que :

$$\tau_{AP}(s') = T' \lfloor s \rfloor$$

où s' est une autre métrique associée au lien reliant les premier et second noeuds, comprenant une partie configurée au niveau du premier noeud et une partie reçue dans le message de mise à jour, et représentant une distance entre noeuds ;

où T' est une constante positive.

Cette métrique associée au chemin peut correspondre dans le contexte d'un protocole de type BGP à l'attribut 'AS path'.

Un deuxième aspect de l'invention propose un noeud de réseau comprenant des moyens adaptés pour mettre en oeuvre les étapes du procédé de gestion selon le premier aspect de la présente invention.

Un troisième aspect de l'invention propose un système de routage comprenant une pluralité de noeuds selon le deuxième aspect de la présente invention.

Un quatrième aspect de l'invention propose un programme d'ordinateur comportant des instructions pour la mise en oeuvre du procédé selon le premier aspect de la présente invention, lorsque ce programme est exécuté par un processeur.

Un cinquième aspect de l'invention propose un support d'enregistrement sur lequel est stocké le programme d'ordinateur selon le quatrième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre une topologie de routage d'un réseau de routeurs selon un art antérieur ;
- la figure 2 illustre une représentation par arbres de chemins de la topologie illustrée en figure 1 ;
- la figure 3 illustre les étapes principales d'un procédé de gestion d'une topologie de routage selon un mode de réalisation de l'invention ;
- les figures 4 et 5 illustrent la gestion d'une panne dans un réseau de communication par paquet selon un autre mode de réalisation de l'invention ; et
- la figure 6 illustre un noeud de réseau selon un mode de réalisation de la présente invention.

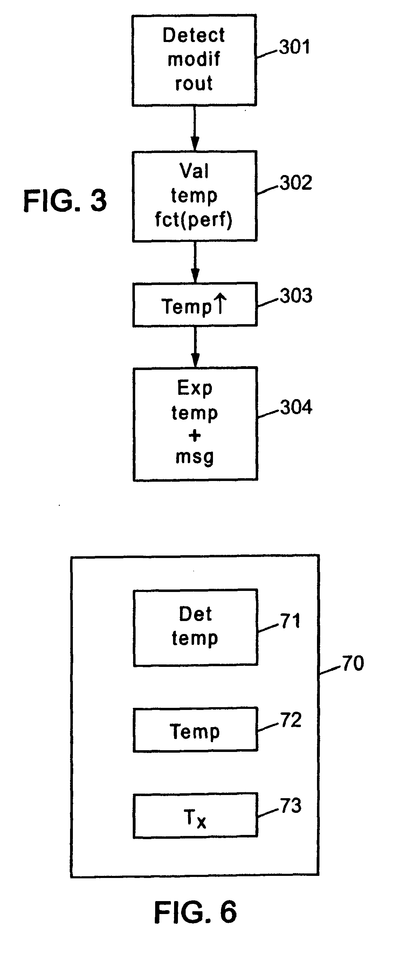

La figure 3 illustre les principales étapes d'un procédé de gestion d'une topologie de routage selon un mode de réalisation de la présente invention.

Dans un réseau de communication par paquets comprenant une pluralité de noeuds reliés par des liens respectifs selon la topologie de routage, une métrique est associée à chaque lien reliant directement deux noeuds entre eux. A une étape 301, on détecte une modification de la topologie de routage, au niveau d'un premier noeud qui est relié par un lien à au moins un second noeud.

Alors, à une étape 302, on détermine une valeur d'un temporisateur associé au second noeud. La valeur de temporisateur est déterminée en fonction de la métrique associée au lien reliant le premier noeud au second noeud, par application d'une fonction croissante.

Ensuite, à une étape 303, le temporisateur est armé avec la valeur déterminée à l'étape 302. A une étape 304, le temporisateur expire, et un message de mise à jour de la topologie est émis à destination du second noeud.

Dans le cas d'une mise en oeuvre au sein d'un réseau appliquant un protocole de routage à état de lien, à l'étape 304, sur expiration du temporisateur, il est prévu de mettre à jour la table de routage du noeud considéré ici.

Par la suite, on note (H, S, $\prec_s$, $\oplus$) un semi-anneau d'endomorphismes décrivant une algèbre de routage dans un graphe G(V,E),

où V désigne l'ensemble des noeuds du graphe, ou encore ensemble des routeurs implémentant un même protocole de routage ;

où E désigne l'ensemble des liens du graphe, ou encore topologie de routage ;

où S désigne l'espace des métriques, ou indicateurs de performance ;

où H est l'ensemble des fonctions de concaténation de S ;

où $\prec_s$ désigne le processus de décision permettant d'ordonner les métriques de S, et

$\oplus$ désigne l'opérateur de composition des politiques de routage de H.

Par souci de simplification, le temps de transmission d'un message au sein d'un réseau, c'est-à-dire les délais engendrés par la transmission des informations le long d'un médium de communication (air, paire de cuivre, fibre optique, etc... ) ainsi que les délais dus au traitement par les équipements (temps passés dans les files d'attente, temps de traitement, etc... ), est considéré comme négligeable devant une valeur de temporisateur telle que déterminée selon un mode de réalisation de la présente invention.

Toutefois, la mise en oeuvre d'un mode de réalisation de la présente invention ne se limite en rien à cette considération. En effet, pour chaque protocole et chaque réseau de transmission considérés, on peut prévoir d'obtenir des temporisateurs d'un ordre de grandeur suffisamment grand par rapport au temps de transmission, pour que ce dernier puisse être considéré comme négligeable.

Dans les sections suivantes sont exposés le système d'équations qui permettent de déterminer des valeurs de temporisateur selon un mode de réalisation de la présente invention.

On note T l'ensemble défini par les fonctions $\tau$:

$$\tau : S \rightarrow R^+ \cup \{+\propto\}$$

T est un ensemble de fonctions croissantes de temporisateur à appliquer sur chaque arc (u,v) d'un graphe G (V,E). Ce type de fonction de temporisateur fournit une valeur de temporisateur ou encore période de temps pendant laquelle le message de mise à jour de routage est retenu dans un mode de réalisation.

Une telle fonction de temporisateur est ici adaptée pour avantageusement prendre en compte la métrique associée à l'arc (u,v). Cette fonction est croissante, de sorte que plus la métrique associée est grande, plus longtemps le message de mise à jour à émettre sera retardé. Ainsi, avantageusement, les temporisateurs utilisés dans un mode de réalisation de l'invention ne sont pas statiques, ni prédéterminés et peuvent retarder différemment un message de mise à jour de routage en fonction de la métrique associée au chemin considéré.

On note :

$0_T \in T$ la fonction de temporisateur qui fournit toujours la valeur nulle, et

$\propto_T \in T$ la fonction de temporisateur qui fournit toujours la valeur infinie.

Soit + l'opérateur défini par la relation suivante :

$$\forall \tau, \tau', \tau'' \in T, \tau'' = \tau + \tau' \Leftrightarrow \forall s \in S, \tau''(s) = \tau(s) + \tau'(s)$$

On cherche à présent à déterminer un temporisateur $\tau_{uv}$ à partir de la fonction de concaténation de l'ensemble H, notée $h_{uv}$ pour un arc (u, v).

On note :

$\Delta_t : H \rightarrow T,$ la transformation qui fournit une valeur de temporisateur à partir d'une fonction de concaténation.

La relation suivante est vérifiée :

$$\Delta_t(H) \subseteq T$$

Pour rappel, (H, S, $\prec_s$, $\oplus$) est le semi-anneau d'endomorphismes décrivant une algèbre de routage dans un graphe G(V,E). Chaque noeud installe un temporisateur par arc entrant et par arc sortant du graphe, conformément à sa politique de routage et conformément à une même transformation $\Delta_t$. Autrement dit, un routeur définit des temporisateurs selon un mode de réalisation de la présente invention en se basant sur sa propre politique de routage, en entrée et en sortie, et sur la métrique associée à ce chemin.

La transformation $\Delta_t$ est adaptée pour déterminer des temporisateurs selon un mode de réalisation de la présente invention si et seulement si elle vérifie les propriétés suivantes :

- une propriété de sommabilité:

$$\Delta_t(h \oplus h') = \Delta_t(h) + \Delta_t(h') \; ;$$

et

- une propriété de stricte croissance :

$$h \prec_H h' \Rightarrow \Delta_t(h) \prec_T \Delta_t(h') .$$

Un tel système d'équations permet de déterminer la transformation $\Delta_t$ qui vérifie l'ensemble des propositions suivantes :

- proposition 1 : les messages de routage atteignent un routeur donné selon son propre ordre de préférence, ce routeur pouvant alors avantageusement converger directement vers sa table de routage finale ;
- proposition 2 : le temps de propagation d'un message est égal à la somme des temps de propagation requis pour traverser chaque arc le long du chemin considéré ;
- proposition 3 : un routeur détermine des valeurs de temporisateur selon un mode de réalisation de la présente invention sur la base de sa politique de routage et de la métrique associée au lien considéré.

Il convient de noter ici que l'application de tels temporisateurs est avantageuse même si seule une partie des routeurs du réseau met en oeuvre ces temporisateurs efficaces Ainsi, on peut avantageusement envisager de n'implémenter un mode de réalisation de la présente invention que pour un groupe d'opérateurs désirant offrir un service nécessitant un certain degré de qualité.

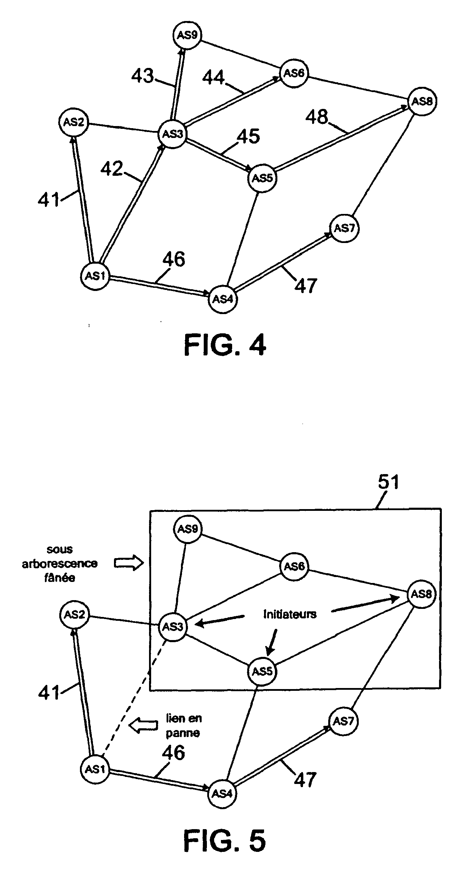

Les figures 4 et 5 illustrent la gestion d'une panne dans un réseau de transmission de paquet, ou réseau de communication par paquet, selon un autre mode de réalisation de l'invention, appliquant un protocole de routage de type BGP.

La figure 4 illustre la mise en oeuvre d'un mode de réalisation dans un réseau comprenant neufs systèmes autonomes ou AS différents, les meilleurs chemins correspondant ici aux plus courts chemins en nombre de bonds.

Les plus courts chemins établis à la convergence pour joindre AS1 sont représentés par les traits fléchés 41 à 48. Dans le cas considéré ici, le lien 42 entre AS1 et AS3 tombe en panne. Cette situation est illustrée à la figure 5.

Comme illustré à la figure 5, suite à la panne de ce lien 42, le chemin utilisé par un des noeuds AS3, AS5, AS6, AS8 et AS9, appartenant à la sous arborescence 51 enracinée en AS3 n'est plus disponible. Ces noeuds AS3, AS5, AS6, AS8 et AS9 sont à présent des noeuds orphelins au regard des chemins les plus courts pour joindre AS1.

Dans cette sous arborescence 51, les noeuds AS6 et AS9, n'ont plus aucun chemin pour joindre AS1, suite à la panne. Ils sont donc dans l'attente qu'un de leurs noeuds voisins leur annonce un nouveau chemin.

Les noeuds AS3, AS5 et AS8 de la sous-arborescence 51 connaisse encore au moins un chemin valide de secours pour joindre la destination AS1, les chemins valides de secours n'étant pas des chemins de la topologie de routage car n'étant pas considérés comme meilleurs chemins avant la panne. Ainsi, les noeuds orphelins AS3, AS5 et AS8 peuvent élire parmi les chemins de secours celui qui correspond au nouveau meilleur chemin, et l'annoncer à leurs noeuds voisins. Ces noeuds orphelins AS3, AS5 et AS8 sont des noeuds initiateurs car ils peuvent donc initier la reconstruction de l'arbre de plus courts chemins partant de AS1 après une panne.

Dans le cas où un procédé de gestion selon un mode de réalisation de la présente invention n'est pas appliqué, il peut se produire que chaque noeud orphelin explore tous les chemins possibles vers la destination AS1 dans l'ordre inverse de ses préférences avant de converger à nouveau sur son nouveau meilleur chemin.

Dans un mode de réalisation de la présente invention, on initie la construction de façon ordonnée en imposant à chacun des noeuds initiateurs un temps d'attente avant de commencer à annoncer son nouveau meilleur chemin. Ainsi, chaque noeud initiateur commence la construction de son arborescence de plus courts chemins avec un décalage adapté par rapport aux autres. Les noeuds initiateurs retardent d'autant plus l'émission du message de mise à jour que la métrique associée à l'arc sur lequel ce message doit être émis est grande.

Dans les sections suivantes est décrite une application de la présente invention au protocole de routage BGP. Dans le contexte du protocole BGP, l'ordonnancement des chemins peut se faire par comparaison successive des attributs attachés aux chemins. Par souci de simplification uniquement, on se limite par la suite aux deux premiers attributs, le "local pref" et l'AS PATH, tels que définis dans le document RFC 1997.

On peut prévoir que chaque AS obéit à des contraintes économiques de telle sorte qu'un AS passe préférentiellement par ses clients ('localpref' élevé), sinon par ses pairs, c'est-à-dire des noeuds avec qui il a un accord d'appairage ('peers' en anglais) ('localpref' intermédiaire), sinon par ses fournisseurs ('localpref' faible). On note 'c2f' un accord client fournisseur, 'peer' un accord entre pairs, et 'f2c' un accord fournisseur client. Un accord d'appairage peut être du type SKA (pour 'Sender Keep All' en anglais).

On suppose que chaque AS privilégie équitablement ses fournisseurs, respectivement ses pairs, respectivement ses clients.

Une modélisation algébrique d'un tel contexte est ici basée sur une association d'une valeur numérique, ou pondération, Ti avec chaque accord. Soit une suite de valeurs (T1, T2, T3) décroissante et vérifiant :

pour tout i, Ti-Ti+1 = T ; où T est une constante strictement positive.

Le signe '*' signifie '0 ou n', le signe ' ?' signifie 0 ou 1, et le signe '+' signifie '1 à n'.

Ainsi si le chemin est de la forme :

- (c2f)*, un message est reçu au bout de T3 unité de temps (cas où le nouveau meilleur chemin est appris par un client, ou une chaîne de n client-fournisseur, c'est-à-dire 0 ou n accords c2f) ;
- (c2f)*(peer), un message est reçu au bout de T2 unité de temps (cas où le nouveau meilleur chemin est appris par un peer, ou une chaîne finissant par un accord d'appairage, éventuellement précédée d'une chaîne de client fournisseur) ;
- (c2f)*(peer)?(f2c)+, un message est reçu au bout de T1 unités de temps (cas où le nouveau meilleur chemin est appris par un ou n fournisseur(s), éventuellement précédé d'un ou d'aucun peer, éventuellement précédé d'une chaîne de client fournisseur).

Les fonctions de temporisateur selon un mode de réalisation de la présente invention peuvent être de la forme :

$$pour\ i < j,\ \tau(s) = +\infty$$

$$pour\ i \geq j,\ \tau(s) = T_j - \sum_{k=i}^{j}(T_i)$$

ou encore

$$pour\ i \geq j,\ \tau(s) = (i - j)xT$$

où s= i-j ; où i et j représentent des critères de préférence respectivement associés aux premier et second noeuds ; et où T est une constante strictement positive.

En prenant par exemple T1 = 2, T2 = 1 et T3 = 0 on obtient :

$$\tau_{c2f,c2f} = \tau_{peer,peer} = \tau_{f2c,f2c} = 0\ \text{unité de temps}$$

$$\tau_{c2f,peer} = \tau_{peer,c2f} = 1 \text{ unité de temps}$$

$$\tau_{c2f,f2c} = 2 \text{ unités de temps.}$$

Ainsi, si un noeud est atteignable par un chemin (c2f)*, ce noeud là reçoit un message de mise à jour de topologie après de 0 unité de temps. Dans le cas où il est atteignable par un chemin (c2f)*(peer), il reçoit le message de mise à jour de topologie au bout de 1 unité de temps. Enfin dans le cas où il est atteignable par un chemin (c2f)*(peer)?(f2c)+ il reçoit le message de mise à jour de topologie au bout de 2 unités de temps.

Dans un mode de réalisation de la présente invention, chaque routeur en bordure de l'AS applique le principe suivant :

- lorsqu'un routeur apprend une route en provenance d'un autre AS, il la marque ('tag' en anglais) d'une valeur, dite *communauté* BGP tel que cela est défini dans le document RFC1997, et notée i indiquant le type d'accord installé sur le lien "entrant" correspondant, c'est à dire entre l'AS d'où provient le message de mise à jour reçu et le présent AS ;
- lorsqu'un routeur émet une route vers un autre AS, il la marque d'une communauté j BGP indiquant le type d'accord installé sur le lien "sortant" correspondant.

Ces communautés permettent par exemple d'associer tous les clients à la valeur 3, tous les 'peers' à la valeur 2, et tous les fournisseurs à la valeur 1. Dès lors selon le couple de communauté (i, j), le routeur retarde ce message conformément aux temporisateurs suivants :

$$\tau_{c2f,c2f}, \tau_{peer,peer}, \tau_{f2c,f2c}, \tau_{c2f,peer}, \tau_{peer,f2c}$$

On note (P,min(| · |), .) l'algèbre des chemins,
où P désigne la topologie de routage, ou encore ensemble des chemins d'un graphe, où |.| la longueur du chemin en nombre de bonds, et

. l'opérateur de concaténation des chemins.

Ainsi, la relation suivante est vérifiée dans cet algèbre :

$$(a, b, c, d).(e, f) = (a, b, c, d, e, f)).$$

Les fonctions de temporisateurs $\tau_{AP}$ peuvent ici s'écrire sous la forme :

$$\tau_{AP}(s') = T' |s'|$$

où T' est une constante strictement positive, et
où s' est une autre métrique associée au lien reliant les premier et second noeuds, comprenant une partie configurée au niveau du premier noeud et une partie reçue dans le message de mise à jour, et représentant une distance entre noeuds.

Par exemple, dans le contexte du protocole de routage BGP, cette métrique s' peut correspondre soit au nombre d'AS ajoutés à la suite de l'AS PATH tel que défini dans BGP, soit au nombre d'AS qui séparent le noeud initiateur de la mise à jour de la topologie de routage de la ressource de destination.

Autrement dit, lorsqu'un routeur en bordure d'AS émet un message de mise à jour de topologie vers un autre AS, il retarde ce message d'un temporisateur de valeur T'.|s'| unités de temps.

On peut écrire une fonction de temporisateur sous la forme suivante, lorsque la valeur de T'est petit devant T :

$$(s,s') \mapsto T.\tau_{LP}(s) + T'.\tau_{AP}(s')$$

où s représente le couple d'accords installés sur le lien BGP entrant et sortant ;

où s' est comme défini ci-dessus, et peut par exemple correspondre au nombre d'AS ajoutés à la suite de l'AS PATH tel que défini ci-avant sur la session de protocole de routage sortante ; et

où T et T' sont des constantes strictement positives.

Grâce à ces fonctions de temporisateurs, on est en mesure de déterminer des valeurs de temporisateur en prenant en compte à la fois des valeurs représentant des critères de préférence associés à chacun des noeuds i et j, et des valeurs s' pouvant indiquer une métrique relative à une distance entre deux noeuds.

La figure 6 illustre un noeud de réseau selon un mode de réalisation de la présente invention.

Un tel noeud de réseau 70 comprend une unité de détermination 71 d'une valeur d'un temporisateur associée à un autre noeud auquel il est relié par un lien de la topologie de routage, ladite valeur de temporisateur étant déterminée sur la base d'une fonction croissante prenant en tant que paramètre la métrique associée audit lien reliant le premier noeud au second noeud de sorte que la valeur de temporisateur est d'autant plus grande que la métrique est grande.

Il comprend en outre une unité de gestion dudit temporisateur 72 et une unité d'émission 73 adaptée pour émettre, sur expiration dudit temporisateur, un message de mise à jour de topologie à destination dudit autre noeud.

L'unité de détermination 71 peut être adaptée pour déterminer la valeur d'un temporisateur à partir de la fonction suivante $\tau_{LP}$ associée à l'autre noeud selon l'équation suivante :

$$pour\ i < j, \tau_{LP}(s) = +\infty$$

$$pour\ i \geq j, \tau_{LP}(s) = (i-j) \times T$$

où s est la métrique associée au lien reliant les premier et second noeuds et correspond au couple (i,j) ; où i et j représentent des critères de préférence respectivement associés aux premier et second noeuds ;

où $\infty$ représente la valeur infinie de temporisateur ; et

où T est une constante positive.

L'unité de détermination 71 peut être adaptée pour déterminer la valeur d'un temporisateur lorsque le premier noeud détecte une modification de routage sur réception d'un message de mise à jour de topologie depuis un autre noeud, la valeur d'un temporisateur issue de la fonction croissante $\tau_{BGP}$ associée au second noeud vérifie l'équation suivante :

$$\tau_{BGP}(s,s') \mapsto T.\tau_{LP}(s) + T'.\tau_{AP}(s')$$

où $\tau_{LP}$ est tel que

$$\forall i < j, \tau_{LP}(s) = +\infty$$

$$\forall i \geq j; \tau_{LP}(s) = (i-j) \times T$$

où s est une métrique associée au lien reliant les premier et second noeuds et correspond au couple (i, j), s comprenant une partie configurée au niveau du premier noeud et une partie reçue dans le message de mise à jour ;

où i et j représentent des critères de préférence respectivement associés aux premier et second noeuds ;

où $\infty$ représente la valeur infinie de temporisateur ; et

où T est une constante positive

où $\tau_{AP}$ est tel que :

$$\tau_{AP}(s') = T'\lfloor s\rfloor$$

où s' est une autre métrique associée au lien reliant les premier et second noeuds, comprenant une partie configurée au niveau du premier noeud et une partie reçue dans le message de mise à jour, et représentant une distance entre noeuds ;
où T' est une constante positive.

**Revendications**

1. Procédé de gestion d'une topologie de routage dans un réseau de communication par paquets comprenant une pluralité de noeuds reliés par des liens respectifs selon ladite topologie de routage;
des métriques ordonnées étant associées respectivement à des liens, chacun reliant directement deux noeuds entre eux ;
ledit procédé comprenant les étapes suivantes au niveau d'un premier noeud relié par un lien à au moins un second noeud, sur détection d'une modification de la topologie de routage :

/a/ déterminer (302) une valeur d'un temporisateur associée au second noeud ;
/b/ armer (303) ledit temporisateur ; et
/c/ sur expiration dudit temporisateur, émettre (304) un message de mise à jour de topologie à destination du second noeud ;

ladite valeur de temporisateur étant fournie par une fonction croissante prenant en tant que paramètre la métrique associée audit lien reliant le premier noeud au second noeud, de sorte que la valeur de temporisateur est d'autant plus grande que la métrique est grande.

2. Procédé de gestion d'une topologie de routage selon la revendication 1, dans lequel le premier noeud détecte la modification de topologie de routage sur détection de la perte d'un lien le reliant à un autre noeud ou sur réception d'un message de mise à jour de topologie depuis un autre noeud.

3. Procédé de gestion d'une topologie routage selon la revendication 1, dans lequel lorsque le premier noeud détecte une modification de routage sur réception d'un message de mise à jour de topologie depuis un autre noeud, la fonction croissante prend en outre en paramètre une métrique reçue dans ledit message de mise à jour.

4. Procédé de gestion d'une topologie de routage selon la revendication 1, dans lequel la valeur d'un temporisateur est fournie par une fonction $\tau_{LP}(s)$ associée au second noeud vérifiant l'équation suivante :

$$\forall i < j, \tau_{LP}(s) = +\infty$$

$$\forall i \geq j; \tau_{LP}(s) = (i-j) \times T$$

où s est la métrique associée au lien reliant les premier et second noeuds et correspond au couple (i, j) ;
où i et j représentent des critères de préférence respectivement associés aux premier et second noeuds ;
où ∞ représente la valeur infinie de temporisateur ; et
où T est une constante positive.

5. Procédé de gestion d'une topologie de routage selon la revendication 1, dans lequel, lorsque le premier noeud détecte une modification de routage sur réception d'un message de mise à jour de topologie depuis un autre noeud, la valeur d'un temporisateur est fournie par une fonction $\tau_{BGP}(s,s')$ associée au second noeud vérifiant l'équation suivante :

$$\tau_{BGP}(s,s') \mapsto T.\tau_{LP}(s) + T'.\tau_{AP}(s')$$

où $\tau_{LP}$ est tel que

$$\forall i < j, \tau_{LP}(s) = +\infty$$

$$\forall i \geq j; \tau_{LP}(s) = (i-j) \times T$$

où s est une métrique associée au lien reliant les premier et second noeuds et correspond au couple (i, j), s comprenant une partie configurée au niveau du premier noeud et une partie reçue dans le message de mise à jour ;
où i et j représentent des critères de préférence respectivement associés aux premier et second noeuds ;
où $\infty$ représente la valeur infinie de temporisateur ; et
où T est une constante positive
où $\tau_{AP}$ est tel que :

$$\tau_{AP}(s') = T'.|s'|$$

où s' est une autre métrique associée au lien reliant les premier et second noeuds, comprenant une partie configurée au niveau du premier noeud et une partie reçue dans le message de mise à jour, et représentant une distance entre noeuds ;
où T'est une constante positive.

6. Noeud (70) de réseau dans un réseau de communication par paquets comprenant une pluralité de noeuds reliés par des liens respectifs selon une topologie de routage ;
des métriques ordonnées étant associées respectivement à des liens, chacun reliant directement deux noeuds entre eux ;
ledit noeud comprenant :

- une unité de détermination (71) d'une valeur d'un temporisateur associée à un autre noeud auquel il est relié par un lien de la topologie de routage, ladite valeur de temporisateur étant fournie par une fonction croissante prenant en tant que paramètre la métrique associée audit lien reliant le premier noeud au second noeud de sorte que la valeur de temporisateur est d'autant plus grande que la métrique est grande ;
- une unité de gestion (72) dudit temporisateur ;
- une unité d'émission (73) adaptée pour émettre, sur expiration dudit temporisateur, un message de mise à jour de topologie à destination dudit autre noeud.

7. Noeud de réseau selon la revendication 6, dans lequel l'unité de détermination est adaptée pour déterminer la valeur d'un temporisateur par une fonction $\tau_{LP}(s)$ associée au second noeud vérifiant l'équation suivante :

$$\forall i < j, \tau_{LP}(s) = +\infty$$

$$\forall i \geq j; \tau_{LP}(s) = (i-j) \times T$$

où s est la métrique associée au lien reliant les premier et second noeuds et correspond au couple (i, j) ;
où i et j représentent des critères de préférence respectivement associés aux premier et second noeuds ;
où $\infty$ représente la valeur infinie de temporisateur ; et

où T est une constante positive.

8. Noeud de réseau selon la revendication 6, dans lequel l'unité de détermination est adaptée pour déterminer, lorsque le premier noeud détecte une modification de routage sur réception d'un message de mise à jour de topologie depuis un autre noeud, la valeur d'un temporisateur par une fonction $\tau_{BGP}(s, s')$ associée au second noeud vérifiant l'équation suivante :

$$\tau_{BGP}(s,s') \mapsto T.\tau_{LP}(s) + T'.\tau_{AP}(s')$$

où $\tau_{LP}$ est tel que

$$\forall i < j, \tau_{LP}(s) = +\infty$$

$$\forall i \geq j; \tau_{LP}(s) = (i-j) \times T$$

où s est une métrique associée au lien reliant les premier et second noeuds et correspond au couple (i, j), s comprenant une partie configurée au niveau du premier noeud et une partie reçue dans le message de mise à jour ; où i et j représentent des critères de préférence respectivement associés aux premier et second noeuds ; où ∞ représente la valeur infinie de temporisateur ; et où T est une constante positive où $\tau_{AP}$ est tel que :

$$\tau_{AP}(s') = T'.|s'|$$

où s' est une autre métrique associée au lien reliant les premier et second noeuds, comprenant une partie configurée au niveau du premier noeud et une partie reçue dans le message de mise à jour, et représentant une distance entre noeuds ; où T' est une constante positive.

9. Système de routage comprenant une pluralité de noeuds de réseau selon la revendication 6.

10. Programme d'ordinateur comportant des instructions pour la mise en oeuvre du procédé selon la revendication 1, lorsque ce programme est exécuté par un processeur.

11. Support d'enregistrement sur lequel est stocké le programme d'ordinateur selon la revendication 10.

**Claims**

1. Method of managing a routing topology in a packet communication network comprising a plurality of nodes linked by respective links according to said routing topology;
ordered metrics being respectively associated with the links, each directly interlinking two nodes;
said method comprising the following steps on a first node linked by a link to at least one second node, upon detection of a modification of the routing topology:

/a/ determining (302) value of a timer associated with the second node;
/b/ setting (303) said timer; and
/c/ on expiry of said timer, sending (304) a topology update message to the second node;

said timer value being supplied by an increasing function that takes as parameter the metric associated with said link linking the first node to the second node, so that the timer value is all the greater when the metric is great.

2. Method of managing a routing topology according to Claim 1, in which the first node detects the routing topology modification upon detection of the loss of a link linking it to another node or upon receipt of a topology update message from another node.

3. Method of managing a routing topology according to Claim 1, in which, when the first node detects a routing modification upon receipt of a topology update message from another node, the increasing function also takes as parameter a metric received in said update message.

4. Method of managing a routing topology according to Claim 1, in which the value of a timer is supplied by a function $\tau_{LP}(s)$ associated with the second node that satisfies the following equation:

$$\forall i < j, \tau_{LP}(s) = +\infty$$

$$\forall i \geq j; \tau_{LP}(s) = (i-j) \times T$$

in which s is the metric associated with the link linking the first and second nodes and corresponds to the pair (i,j):

in which i and j represent preference criteria respectively associated with the first and second nodes;
in which $\infty$ represents the infinite timer value; and
in which T is a positive constant.

5. Method of managing a routing topology according to Claim 1, in which, when the first node detects a routing modification upon receipt of a topology update message from another node, the value of a timer is supplied by a function $\tau_{BGP}(s, s')$ associated with the second node that satisfies the following equation:

$$\tau_{BGP}(s,s') \mapsto T.\tau_{LP}(s) + T'.\tau_{AP}(s')$$

in which $\tau_{LP}$ is such that

$$\forall i < j, \tau_{LP}(s) = +\infty$$

$$\forall i \geq j; \tau_{LP}(s) = (i-j) \times T$$

in which s is a metric associated with the link linking the first and second nodes and corresponds to the pair (i,j), s comprising a part configured on the first node and a part received in the update message;
in which i and j represent preference criteria respectively associated with the first and second nodes;
in which $\infty$ represents the infinite timer value; and
in which T is a positive constant in which $\tau_{AP}$ is such that:

$$\tau_{AP}(s') = T'.|s'|$$

in which s' is another metric associated with the link linking the first and second nodes, comprising a part configured on the first node and a part received in the update message, and representing a distance between nodes;
in which T' is a positive constant.

6. Network node (70) in a packet communication network comprising a plurality of nodes linked by respective links according to a routing topology; ordered metrics being respectively associated with links, each directly interlinking two nodes;
said node comprising:

- a unit (71) for determining a value of a timer associated with another node to which it is linked by a link of the routing topology, said timer value being supplied by an increasing function that takes as parameter the metric associated with said link linking the first node to the second node such that the timer value is all the greater when the metric is great;
- a unit (72) for managing said timer;
- a sending unit (73) suitable for sending, on expiry of said timer, a topology update message to said other node.

7. Network node according to Claim 6, in which the determination unit is suitable for determining the value of a timer by a function $\tau_{LP}(s)$ associated with the second node that satisfies the following equation:

$$\forall i < j, \tau_{LP}(s) = +\infty$$

$$\forall i \geq j; \tau_{LP}(s) = (i-j) \times T$$

in which s is the metric associated with the link linking the first and second nodes and corresponds to the pair (i,j);
in which i and j represent preference criteria respectively associated with the first and second nodes;
in which $\infty$ represents the infinite timer value; and
in which T is a positive constant.

8. Network node according to Claim 6, in which the determination unit is suitable for determining, when the first node detects a routing modification upon receipt of a topology update message from another node, the value of a timer by a function $\tau_{BGP}(s,s')$ associated with the second node that satisfies the following equation:

$$\tau_{BGP}(s,s') \mapsto T.\tau_{LP}(s) + T'.\tau_{AP}(s')$$

in which $\tau_{LP}$ is such that

$$\forall i < j, \tau_{LP}(s) = +\infty$$

$$\forall i \geq j; \tau_{LP}(s) = (i-j) \times T$$

in which s is a metric associated with the link linking the first and second nodes and corresponds to the pair (i,j), s comprising a part configured on the first node and a part received in the update message;
in which i and j represent preference criteria respectively associated with the first and second nodes;
in which $\infty$ represents the infinite timer value; and
in which T is a positive constant
in which $\tau_{AP}$ is such that:

$$\tau_{AP}(s') = T'.|s'|$$

in which s' is another metric associated with the link linking the first and second nodes, comprising a part configured on the first node and a part received in the update message, and representing a distance between nodes;
in which T' is a positive constant.

9. Routing system comprising a plurality of network nodes according to Claim 6.

**10.** Computer program comprising instructions for implementing the method according to Claim 1, when this program is run by a processor.

**11.** Storage medium on which is stored the computer program according to Claim 10.

**Patentansprüche**

**1.** Verfahren zur Verwaltung einer Routing-Topologie in einem Paketvermittlungsnetz, das eine Vielzahl von Knoten aufweist, die durch jeweilige Links gemäß der Routing-Topologie verbunden sind;
wobei geordnete Metriken jeweils Links zugeordnet sind, die jeder zwei Knoten direkt miteinander verbinden;
wobei das Verfahren im Bereich eines ersten Knotens, der durch einen Link mit mindestens einem zweiten Knoten verbunden ist, bei Erfassung einer Änderung der Routing-Topologie die folgenden Schritte enthält:

/a/Bestimmen (302) eines dem zweiten Knoten zugeordneten Werts eines Timers;
/b/Einschalten (303) des Timers; und
/c/bei Ablauf des Timers, Senden (304) einer Topologie-Aktualisierungsmitteilung an den zweiten Knoten;

wobei der Timerwert von einer zunehmenden Funktion geliefert wird, die als Parameter die dem den ersten Knoten mit dem zweiten Knoten verbindenden Link zugeordnete Metrik nimmt, so dass der Timerwert umso größer ist, je größer die Metrik ist.

**2.** Verfahren zur Verwaltung einer Routing-Topologie nach Anspruch 1, bei dem der erste Knoten die Änderung der Routing-Topologie bei Erfassung des Verlusts eines Links, der ihn mit einem anderen Knoten verbindet, oder bei Empfang einer Topologie-Aktualisierungsmitteilung von einem anderen Knoten erfasst.

**3.** Verfahren zur Verwaltung einer Routing-Topologie nach Anspruch 1, bei dem, wenn der erste Knoten bei Empfang einer Topologie-Aktualisierungsmitteilung von einem anderen Knoten eine Routing-Änderung erfasst, die zunehmende Funktion außerdem als Parameter eine in der Aktualisierungsmitteilung empfangene Metrik nimmt.

**4.** Verfahren zur Verwaltung einer Routing-Topologie nach Anspruch 1, bei dem der Wert eines Timers durch eine dem zweiten Knoten zugeordnete Funktion $\tau_{LP}$ (s) geliefert wird, die die folgende Gleichung erfüllt:

$$\forall i < j, \tau_{LP}(s) = +\infty$$

$$\forall i \geq j; \tau_{LP}(s) = (i-j) \times T$$

wobei s die dem den ersten und den zweiten Knoten verbindenden Link zugeordnete Metrik ist und dem Paar (i,j) entspricht;
wobei i und j Vorzugskriterien darstellen, die dem ersten bzw. dem zweiten Knoten zugeordnet sind; wobei $\infty$ den unendlichen Timer-Wert darstellt; und wobei T eine positive Konstante ist.

**5.** Verfahren zur Verwaltung einer Routing-Topologie nach Anspruch 1, bei dem, wenn der erste Knoten bei Empfang einer Topologie-Aktualisierungsmitteilung von einem anderen Knoten eine Routing-Änderung erfasst, der Wert eines Timers von einer dem zweiten Knoten zugeordneten Funktion $\tau_{BGP}$ (s, s') geliefert wird, die die folgende Gleichung erfüllt:

$$\tau_{BGP}(s, s') \mapsto T . \tau_{LP}(s) + T' . \tau_{AP}(s')$$

wobei $\tau_{LP}$ derart ist, dass gilt

$$\forall i < j, \tau_{LP}(s) = +\infty$$

$$\forall i \geq j; \tau_{LP}(s) = (i-j) \times T$$

wobei s eine dem den ersten und den zweiten Knoten verbindenden Link zugeordnete Metrik ist und dem Paar (i, j) entspricht, s einen im Bereich des ersten Knotens konfigurierten Teil und einen in der Aktualisierungsmitteilung empfangenen Teil enthält;
wobei i und j Vorzugskriterien darstellen, die dem ersten bzw. dem zweiten Knoten zugeordnet sind;
wobei ∞ den unendlichen Timerwert darstellt; und
wobei T eine positive Konstante ist wobei $\tau_{AP}$ derart ist, dass gilt:

$$\tau_{AP}(s') = T'. \left| s' \right|$$

wobei s' eine andere dem den ersten und den zweiten Knoten verbindenden Link zugeordnete Metrik ist, die einen im Bereich des ersten Knotens konfigurierten Teil und einen in der Aktualisierungsmitteilung empfangenen Teil enthält und einen Abstand zwischen Knoten darstellt;
wobei T' eine positive Konstante ist.

6. Netzknoten (70) in einem Paketvermittlungsnetz, das eine Vielzahl von Knoten enthält, die durch jeweilige Links gemäß einer Routing-Topologie verbunden sind;
wobei geordnete Metriken jeweils Links zugeordnet sind, die jeder zwei Knoten miteinander verbinden; wobei der Knoten enthält:

    - eine Bestimmungseinheit (71) eines einem anderen Knoten zugeordneten Werts eines Timers, mit dem er durch einen Link der Routing-Topologie verbunden ist, wobei der Timerwert von einer zunehmenden Funktion geliefert wird, die als Parameter die dem den ersten Knoten mit dem zweiten Knoten verbindenden Link zugeordnete Metrik nimmt, so dass der Timerwert umso größer ist, je größer die Metrik ist;
    - eine Verwaltungseinheit (72) des Timers;
    - eine Sendeeinheit (73), die geeignet ist, um bei Ablauf des Timers eine Topologie-Aktualisierungsmitteilung an den anderen Knoten zu senden.

7. Netzknoten nach Anspruch 6, bei dem die Bestimmungseinheit geeignet ist, um den Wert eines Timers durch eine dem zweiten Knoten zugeordnete Funktion $\tau_{LP}(s)$ zu bestimmen, die die folgende Gleichung erfüllt:

$$\forall i < j, \tau_{LP}(s) = +\infty$$

$$\forall i \geq j; \tau_{LP}(s) = (i-j) \times T$$

wobei s die dem den ersten und den zweiten Knoten verbindenden Link zugeordnete Metrik ist und dem Paar (i,j) entspricht;
wobei i und j Vorzugskriterien darstellen, die dem ersten bzw. dem zweiten Knoten zugeordnet sind; wobei ∞ den unendlichen Timerwert darstellt; und wobei T eine positive Konstante ist.

8. Netzknoten nach Anspruch 6, bei dem die Bestimmungseinheit geeignet ist, um, wenn der erste Knoten bei Empfang einer Topologie-Aktualisierungsmitteilung von einem anderen Knoten eine Routing-Änderung erfasst, den Wert eines Timers durch eine dem zweiten Knoten zugeordnete Funktion $\tau_{BGP}(s, s')$ zu bestimmen, die die folgende Gleichung erfüllt:

$$\tau_{BGP}(s, s') \mapsto T.\tau_{LP}(s) + T'.\tau_{AP}(s')$$

wobei $\tau_{LP}$ derart ist, dass gilt

$$\forall i \; < \; j, \tau_{LP}(s) \; = \; +\infty$$

$$\forall i \; \geq \; j; \tau_{LP}(s) \; = \; (i-j) \times T$$

wobei s eine dem den ersten und den zweiten Knoten verbindenden Link zugeordnete Metrik ist und dem Paar (i, j) entspricht, s einen im Bereich des ersten Knotens konfigurierten Teil und einen in der Aktualisierungsmitteilung empfangenen Teil enthält;

wobei i und j Vorzugskriterien darstellen, die dem ersten bzw. dem zweiten Knoten zugeordnet sind;

wobei $\infty$ den unendlichen Timerwert darstellt; und

wobei T eine positive Konstante ist wobei $\tau_{AP}$ derart ist, dass gilt:

$$\tau_{AP}(s') = T'.|s'|$$

wobei s' eine andere Metrik ist, die dem den ersten und den zweiten Knoten verbindenden Link zugeordnet ist, einen im Bereich des ersten Knotens konfigurierten Teil und einen in der Aktualisierungsmitteilung empfangenen Teil enthält und einen Abstand zwischen Knoten darstellt;

wobei T' eine positive Konstante ist.

9. Routing-System, das eine Vielzahl von Netzknoten nach Anspruch 6 enthält.

10. Computerprogramm, das Anweisungen zur Durchführung des Verfahrens nach Anspruch 1 aufweist, wenn dieses Programm durch einen Prozessor ausgeführt wird.

11. Aufzeichnungsträger, auf dem das Computerprogramm nach Anspruch 10 gespeichert ist.

# FIG. 1

# FIG. 2

**FIG. 3**

Detect
modif
rout — 301

Val
temp
fct(perf) — 302

Temp↑ — 303

Exp
temp
+
msg — 304

Det
temp — 71

Temp — 72

Tx — 73

— 70

**FIG. 6**

FIG. 4

FIG. 5

**EP 2 345 210 B1**

## RÉFÉRENCES CITÉES DANS LA DESCRIPTION

**Documents brevets cités dans la description**

- US 2005195835 A1, Savage

- EP 1473890 A